# EUROPÄISCHE PATENTANMELDUNG

(11) **EP 3 739 554 A1**
(43) Veröffentlichungstag der Anmeldung: **18.11.2020**
(21) Anmeldenummer: 20020158.0
(22) Anmeldetag: 07.04.2020
(51) Int. Cl.: G07C 9/00, G07C 9/27, H04L 9/08, H04L 9/32, G07C 9/21

(54) **VERFAHREN ZUM BETREIBEN EINES ZUTRITTSKONTROLLSYSTEMS SOWIE ZUTRITTSKONTROLLSYSTEM**

(30) Priorität: 16.05.2019 AT 1852019
(71) Anmelder: EVVA Sicherheitstechnologie GmbH, 1120 Wien (AT)
(72) Erfinder: Wimberger, Dieter, 1230 Wien (AT); Korthauer, Thomas, 3013 Tullnerbach (AT)
(74) Vertreter: Keschmann, Marc

(57) **Zusammenfassung**

Bei einem Verfahren zum Betreiben eines Zutrittskontrollsystems zur Zutrittskontrolle insbesondere in Gebäuden wird ein sicherer Übertragungskanal zwischen einem elektronischen Berechtigungsträger (5) und einer Zutrittskontrollvorrichtung (2) eingerichtet und Zutrittsrechtsdaten über den sicheren Übertragungskanal umfasst, wobei in Abhängigkeit von der festgestellten Zutrittsberechtigung ein Sperrmittel zum wahlweisen Freigeben oder Sperren des Zutritts angesteuert wird. Eine Systemverwaltungseinheit (1) und die Zutrittskontrollvorrichtung (2), nicht jedoch der elektronische Berechtigungsträger (5) haben einen gemeinsamen Systemschlüssel gespeichert und der elektronische Berechtigungsträger (5) hat einen Trägeridentifikator und einen trägerspezifischen Schlüssel gespeichert, wobei die Einrichtung des sicheren Übertragungskanals die Überprüfung der Authentizität und Integrität des Übertragungskanals umfasst, indem der trägerspezifische Schlüssel in der Zutrittskontrollvorrichtung (2) unter Anwendung einer Schlüsselableitungsfunktion aus dem Systemschlüssel und dem Trägeridentifikator abgeleitet wird und die Übereinstimmung des abgeleiteten trägerspezifischen Schlüssels mit dem im Berechtigungsträger gespeicherten trägerspezifischen Schlüssel überprüft wird, vorzugsweise unter Verwendung eines Zero-Knowledge-Protokolls.

## Beschreibung

Die Erfindung betrifft ein Verfahren zum Betreiben eines Zutrittskontrollsystems zur Zutrittskontrolle insbesondere in Gebäuden, wobei das Zutrittskontrollsystem wenigstens eine elektronische Systemverwaltungseinheit, wenigstens einen elektronischen, von der Systemverwaltungseinheit mit Zutrittsrechtsdaten drahtlos beschreibbaren Berechtigungsträger und wenigstens eine Zutrittskontrollvorrichtung umfasst, wobei das Verfahren die Einrichtung eines sicheren Übertragungskanals zwischen dem elektronischen Berechtigungsträger und der Zutrittskontrollvorrichtung und die Übermittlung von Zutrittsrechtsdaten vom elektronischen Berechtigungsträger an die Zutrittskontrollvorrichtung über den sicheren Übertragungskanal umfasst, wobei die Zutrittsrechtsdaten in der Zutrittskontrollvorrichtung zur Feststellung der Zutrittsberechtigung ausgewertet werden und in Abhängigkeit von der festgestellten Zutrittsberechtigung ein Sperrmittel zum wahlweisen Freigeben oder Sperren des Zutritts angesteuert wird.

Weiters betrifft die Erfindung ein Zutrittskontrollsystem zur Zutrittskontrolle insbesondere in Gebäuden, umfassend wenigstens eine elektronische Systemverwaltungseinheit, wenigstens einen elektronischen, von der Systemverwaltungseinheit mit Zutrittsrechtsdaten drahtlos beschreibbaren Berechtigungsträger und wenigstens eine Zutrittskontrollvorrichtung mit einem Sperrmittel zum wahlweisen Freigeben oder Sperren des Zutritts und einer Sende-/Empfangseinrichtung, um eine bidirektionale Datenübermittlung zwischen dem elektronischen Berechtigungsträger und der Zutrittskontrollvorrichtung zu erlauben, wobei die Zutrittskontrollvorrichtung Datenverarbeitungsmittel zur Feststellung der Zutrittsberechtigung auf Grund von empfangenen Zutrittsrechtsdaten aufweist und die Datenverarbeitungsmittel mit dem Sperrmittel zum wahlweisen Freigeben oder Sperren des Zutritts zusammenwirken.

Bei größeren Schließsystemen mit einer Mehrzahl von Schließeinheiten und elektronischen Berechtigungsträgern werden die Zutrittsberechtigungen zur einfacheren Verwaltung meist in einer Zutrittskontrollzentrale bzw. einer Systemverwaltungseinheit gespeichert. Die Systemverwaltungseinheit weist hierbei üblicherweise eine Datenbank auf, in der die einzelnen Schließeinheiten, die Berechtigungsträger und die jeweiligen Zutrittsberechtigungen verwaltet werden können. Über eine an die Systemverwaltungseinheit angeschlossene Schreibeinrichtung können die elektronischen Berechtigungsträger entsprechend den jeweils gewünschten Zutrittsberechtigungen mit Zutrittsrechtsdaten programmiert werden.

In der WO 2009/094683 A1 ist in diesem Zusammenhang vorgeschlagen worden, die Programmierung der Berechtigungsträger mit Zutrittsrechtsdaten über ein drahtloses Telekommunikationsnetz vorzunehmen, wobei die Zutrittsrechtsdaten von der Systemverwaltungseinheit an ein drahtloses mobiles Telekommunikationsgerät des jeweils gewünschten Benutzers gesendet werden. Die vom mobilen Telekommunikationsgerät empfangenen Zutrittsrechtsdaten können einem geeigneten Berechtigungsträger, wie z.B. einem Identifikationsmedium (RFID-Transponder oder dgl.), zur Verfügung gestellt werden, welches auf diese Art und Weise eine Schlüsselfunktion erhält. Dadurch wird eine Art "online-Schlüssel" geschaffen, da der Berechtigungsträger über das mobile Telekommunikationsnetz und das entsprechende mobile Endgerät umprogrammiert werden kann, um auf diese Art und Weise die Zutrittsrechtsdaten und damit die Zutrittsberechtigung zu ändern.

Auf Grund der Möglichkeit der entfernten Programmierung von Berechtigungsträgern ist es zur Änderung der Zutrittsberechtigungen nicht mehr notwendig, einen Zugriff direkt auf die einzelnen Schließeinheiten zu erhalten. Die Schließeinheiten können nach der Installation und Initialisierung als autonome Einheiten arbeiten und erfordern insbesondere keine Netzwerkanbindung.

Obwohl die elektronische Überprüfung der Zutrittsberechtigung allgemein eine Reihe von Vorteilen bietet, wie z.B. die Möglichkeit der raschen Änderung von Berechtigungsdaten und eine wesentlich größere Codierungsvielfalt und -komplexität als bei einer mechanischen Berechtigungsabfrage, können elektronisch vorliegende Zutrittsberechtigungsdaten, insbesondere solche, die drahtlos übertragen werden, bei ungenügenden Sicherheitsvorkehrungen leicht und unbemerkt abgefangen oder kopiert und missbräuchlich verwendet werden.

Mit der Übersendung von Zutrittsrechtsdaten von der Systemverwaltungseinheit an mobile Telekommunikationsgeräte ist beispielsweise das Risiko verbunden, dass die Zutrittsrechtsdaten von unberechtigten Personen manipuliert oder abgefangen werden. Sicherheitskritische Angriffspunkte bietet auch die Datenübertragung zwischen dem Berechtigungsträger und der Zutrittskontrollvorrichtung. Unter Zutrittskontrollvorrichtungen oder Schließeinheiten sind im Rahmen der Erfindung unter anderem elektrische, elektronische oder mechatronische Schließeinheiten, insbesondere Schlösser, zu verstehen. Schließeinheiten können hierbei verschiedene Komponenten umfassen, wie z.B. Leseeinrichtungen für Identifikationsmedien, insbesondere elektronische Schlüssel, eine Schließelektronik und dgl. Zutrittskontrollvorrichtungen bzw. Schließeinheiten dienen dabei insbesondere dazu, den Zutritt zu Räumen in Abhängigkeit von der Zutrittsberechtigung zu versperren oder freizugeben und sind dementsprechend zum Einbau in Türen, Fenstern und dgl. vorgesehen. Unter mechanischen Schließeinheiten sind z.B. Zylinderschlösser zu verstehen. Mechatronische Schließeinheiten sind z.B. elektromotorisch angetriebene Sperreinrichtungen, insbesondere E-Zylinder. Elektrische Schließeinheiten sind z.B. elektrische Türöffner.

Unter einem Freigabemittel ist im Rahmen der Erfindung z.B. ein mechanisch wirkendes Sperrelement, das zwischen einer Sperr- und einer Freigabestellung bewegt werden kann, ein mechanisches oder magnetisches Kupplungselement, das ein Betätigungselement, wie z.B. eine Handhabe, mit einem Sperrglied koppelt oder entkoppelt, oder ein elektrisch sperr- und/oder freigebbares Sperrelement, wie z.B. ein elektrischer Türöffner, zu verstehen.

Unter einem Berechtigungsträger wird ein Element verstanden, welches elektronische Zutrittsrechtsdaten in einem elektronischen Speicher gespeichert haben kann. Der Berechtigungsträger kann beliebige Formen annehmen und z.B. in Form eines NFC-Tags vorliegen oder als Mobiltelefon oder anderes tragbares elektronisches Gerät ausgebildet sein, welches zur drahtlosen Datenübertragung ausgebildet ist.

Unter einer elektronischen Systemverwaltungseinheit wird eine funktionale Einheit verstanden, welche das Zutrittskontrollsystem verwaltet und steuert. Es umfasst in der Regel wenigstens eine Recheneinheit. Die Systemverwaltungseinheit kann von einer einzigen Recheneinheit gebildet sein. Alternativ können die Funktionen und Aufgaben der Systemverwaltungseinheit auf mehrere Recheneinheiten verteilt sein, die untereinander über ein Kommunikationsnetzwerk verbunden sind. Die Systemverwaltungseinheit kann eine Datenbank umfassen, in der Informationen über die beteiligten Berechtigungsträger, die beteiligten Zutrittskontrollvorrichtungen sowie über die Zutrittsrechtsdaten gespeichert sind. Zur Bedienung der Systemverwaltungseinheit kann ein User-Interface vorgesehen sein, über welches ein Systemadministrator das Zutrittskontrollsystem verwalten und steuern kann.

Um die Sicherheit eines Zutrittskontrollsystems sicherzustellen, bei dem Zutrittsrechtsdaten drahtlos übertragen werden, müssen folgende Punkte erfüllt sein:
- Die Zutrittsrechtsdaten müssen vom Schließsystem stammen, d.h. von der Systemverwaltungseinheit ausgestellt worden sein, zu dem die Zutrittskontrollvorrichtung gehört (Authentizität der Berechtigung).
- Die Berechtigung darf nach der Ausstellung durch die Systemverwaltungseinheit nicht mehr verändert worden sein (Integrität der Berechtigung).
- Die Berechtigung muss der Person den Zutritt zu dieser bestimmten Zutrittskontrollvorrichtung erlauben (Autorisierung durch Berechtigung).
- Die Berechtigung darf für Dritte nicht einfach lesbar sein, damit eine Verknüpfung mit der Person auf technischer Ebene nicht möglich ist (Vertraulichkeit der Berechtigung).
- Der Vorgang des Austausches der Berechtigung zwischen der Zutrittskontrollvorrichtung und dem Berechtigungsträger:
   - soll sicher sein (Authentizität und Integrität der Übertragung),
   - darf nicht einfach wiederholbar sein: ein Mitschneiden und Wiederholen der Kommunikation auf dem Luftweg darf nicht wieder zu einer Freigabe führen (Replay-Schutz).
- Es muss einen einfachen Mechanismus geben, mit dem im Falle des Verlustes des Berechtigungsträgers die Schließkomponente wieder sicher gemacht werden kann.

Weiters ist man bestrebt den Stromverbrauch der Komponenten des Zutrittskontrollsystems gering zu halten, damit die Stromversorgung durch Batterien über eine möglichst lange Zeit ohne Batteriewechsel erfolgen kann. Eine sog. Low-Power Anwendung zeichnet sich durch
- eine begrenzte Stromversorgung bei gleichzeitig erwarteter hoher Laufzeit und
- eine auf Basis des Stromverbrauchs relativ geringe zur Verfügung stehende und genutzte Rechenleistung, aus.

Die vorliegende Erfindung zielt darauf ab, ein Zutrittskontrollsystem dahingehend weiterzubilden, dass den oben genannten Anforderungen Rechnung getragen werden kann.

Zur Lösung dieser Aufgabe ist gemäß einem ersten Aspekt der Erfindung bei einem Verfahren der eingangs genannten Art vorgesehen, dass die Systemverwaltungseinheit und die Zutrittskontrollvorrichtung, nicht jedoch der elektronische Berechtigungsträger einen gemeinsamen Systemschlüssel gespeichert haben und der elektronische Berechtigungsträger einen Trägeridentifikator und einen trägerspezifischen Schlüssel gespeichert hat und dass die Einrichtung des sicheren Übertragungskanals die Überprüfung der Authentizität und Integrität des Übertragungskanals umfasst, indem der trägerspezifische Schlüssel in der Zutrittskontrollvorrichtung unter Anwendung einer Schlüsselableitungsfunktion aus dem Systemschlüssel und dem Trägeridentifikator abgeleitet wird und die Übereinstimmung des abgeleiteten trägerspezifischen Schlüssels mit dem im Berechtigungsträger gespeicherten trägerspezifischen Schlüssel überprüft wird, vorzugsweise unter Verwendung eines Zero-Knowledge-Protokolls überprüft wird.

Unter dem Trägeridentifikator wird hierbei eine für jeden Berechtigungsträger eindeutige Kennung verstanden, die z.B. in Form eines elektronischen Codes vorliegt.

Dadurch, das der trägerspezifische Schlüssel lediglich im Berechtigungsträger gespeichert vorliegt, nicht jedoch in der Zutrittskontrollvorrichtung, da er in der Zutrittskontrollvorrichtung mit Hilfe einer Schlüsselableitungsfunktion abgeleitet wird, entfällt die Notwendigkeit einer individuellen Programmierung der einzelnen Zutrittskontrollvorrichtungen. Dadurch, dass die Einrichtung des sicheren Übertragungskanals zwischen der Zutrittskontrollvorrichtung und dem Berechtigungsträger unter anderem auf Grund einer Überprüfung der Übereinstimmung der trägerspezifischen Schlüssel erfolgt, wird kein Identifikator der Zutrittskontrollvorrichtung für den Aufbau der Kommunikation oder für die Auswahl von Zutrittsberechtigungen eingesetzt. Es wird somit kein individueller Schlüssel für jede Zutrittskontrollvorrichtung benötigt.

Vielmehr beruht die Einrichtung des sicheren Übertragungskanals auf dem trägerspezifischen Schlüssel, der aus dem systemweit gleichen Systemschlüssel abgeleitet wird und hauptsächlich der Besicherung der Kommunikation zwischen dem Berechtigungsträger und der Zutrittskontrollvorrichtung dient. Der Systemschlüssel wiederum liegt im Berechtigungsträger nicht vor, sondern lediglich in der Systemverwaltungseinheit und in der Zutrittskontrollvorrichtung.

Dadurch, dass die Übereinstimmung des abgeleiteten trägerspezifischen Schlüssels bevorzugt mit dem im Berechtigungsträger gespeicherten trägerspezifischen Schlüssel unter Verwendung eines Zero-Knowledge-Protokolls erfolgt, wird die Übermittlung des trägerspezifischen Schlüssels zwischen der Zutrittskontrollvorrichtung und dem Berechtigungsträger vermieden. Unter einem Zero-Knowledge-Protokoll wird hierbei ein Protokoll verstanden, bei dem zwei Partner kommunizieren und sich die beiden Partner davon überzeugen können, dass der jeweils andere Partner über dasselbe Geheimnis verfügt, ohne dass dabei Informationen über das Geheimnis selbst bekannt gegeben werden müssen.

Insgesamt wird ein Schließsystem geschaffen, bei dem ein Geheimnis, das nur der Systemverwaltungseinheit und den zugehörigen Zutrittskontrollvorrichtungen bekannt ist, nämlich der Systemschlüssel, keinesfalls aber dem Berechtigungsträger, genutzt wird, um die Authentizität und die Integrität von Berechtigungen herzustellen.

Für die Herstellung der Authentizität und der Integrität der Datenübertragung zwischen dem Mobilgerät und der Schließkomponente gibt es ein Geheimnis, nämlich den trägerspezifischen Schlüssel, der von der Systemverwaltungseinheit und von der Zutrittskontrollvorrichtung aus dem Systemschlüssel abgeleitet werden kann und identifizierbar für jeden Berechtigungsträger, der eine eindeutige Trägeridentifikator aufweist, ein anderes ist, und der dem Berechtigungsträger bekannt ist.

Gemäß einer bevorzugten Verfahrensweise ist vorgesehen, dass im elektronischen Berechtigungsträger und in der Zutrittskontrollvorrichtung aus dem trägerspezifischen Schlüssel wenigstens ein geheimer, gemeinsamer Sitzungsschlüssel abgeleitet wird, worauf der wenigstens eine Sitzungsschlüssel zum Einrichten des sicheren Übertragungskanals zwischen dem elektronischen Berechtigungsträger und der Zutrittskontrollvorrichtung verwendet wird.

Weiters kann bevorzugt vorgesehen sein, dass der elektronische Berechtigungsträger programmiert wird, indem in der Systemverwaltungseinheit der trägerspezifische Schlüssel unter Anwendung einer Schlüsselableitungsfunktion aus dem in der Systemverwaltungseinheit gespeicherten Systemschlüssel und der Trägeridentifikator abgeleitet wird und der trägerspezifische Schlüssel, ggf. gemeinsam mit Zutrittsrechtsdaten, von der Systemverwaltungseinheit über eine drahtlose Kommunikationsverbindung, insbesondere über ein Mobilfunknetz, an den elektronischen Berechtigungsträger übermittelt wird. Der trägerspezifische Schlüssel wird somit in der Systemverwaltungseinheit mit Hilfe der gleichen Schlüsselableitungsfunktion abgeleitet wie in der Zutrittskontrollvorrichtung.

Eine weitere bevorzugte Verfahrensweise sieht vor, dass der Datenaustausch zwischen dem elektronischen Berechtigungsträger und der Zutrittskontrollvorrichtung mittels eines symmetrischen Verschlüsselungsverfahrens verschlüsselt ist, vorzugsweise unter Verwendung von Blockchiffren.

Insbesondere kann das Verschlüsselungsverfahren mit einem Authentifizierungsverfahren kombiniert sein, wobei das Authentifizierungsverfahren bevorzugt einen Message Authentication Code (MAC) - Algorithmus umfasst, bei dem aus den zu schützenden Daten und einem geheimen Schlüssel eine Prüfsumme (Message Authentication Code) errechnet wird, wobei die Kombination des Verschlüsselungsverfahrens mit dem Authentifizierungsverfahren vorzugsweise als Authenticated Encryption with Associated Data (AEAD) - Verfahren ausgebildet ist.

Durch die Verwendung einer symmetrischen Verschlüsselung, insbesondere eines AEAD-Verfahrens, wird die erforderliche Rechenleistung auf ein Minimum reduziert, sodass ein Einsatz im Ultra-Low-Power Bereich ermöglicht wird. Damit wird auch die Geschwindigkeit der Auswertung der Zutrittsrechtsdaten in der Zutrittskontrollvorrichtung erhöht und die Wartezeit bis zu einer Freigabe des Sperrmittels reduziert. Durch den Einsatz eines symmetrischen Verschlüsselungsverfahrens kann auf den Einsatz von Zertifikaten und einer Public-Key-Infrastruktur verzichtet werden.

Das symmetrische Verschlüsselungsverfahren ist insbesondere dazu geeignet, zum gleichen Zeitpunkt die Authentizität, Integrität und Vertraulichkeit sicherzustellen. Bei AEAD Verfahren werden für die Authentizität und Integrität kryptografische Prüfsummen erstellt, die auch als Zufallsgeneratoren und als Basis für die Ableitung von Schlüsseln einsetzbar sind. Es wird daher das gleiche Verfahren auch benutzt, um die trägerspezifischen Schlüssel mit Hilfe der Schlüsselableitungsfunktion abzuleiten und Blöcke von Zutrittsrechtsdaten über den Einsatz eines Prüfsummenanteils als Initialvektor für nachfolgende Blöcke zu verknüpfen.

Zu diesem Zweck ist bevorzugt vorgesehen, dass die Zutrittsrechtsdaten im Berechtigungsträger mit einem Medienschlüssel verschlüsselt vorliegen und dass der Medienschlüssel in der Systemverwaltungseinheit und in der Zutrittskontrollvorrichtung, nicht jedoch in dem elektronischen Berechtigungsträger gespeichert ist. Für die Herstellung der Authentizität und Integrität der Zutrittsrechtsdaten gibt es somit ein gesondertes Geheimnis, den Medienschlüssel, der ebenfalls nur der Systemverwaltungseinheit und den zugehörigen Zutrittskontrollvorrichtungen bekannt ist.

Eine weitere bevorzugte Ausbildung sieht vor, dass das Zutrittskontrollsystem eine Mehrzahl von Zutrittskontrollvorrichtungen umfasst, die Systemverwaltungseinheit und die Zutrittskontrollvorrichtung, nicht jedoch der elektronische Berechtigungsträger einen gemeinsamen Gruppenidentifikator gespeichert haben und dass der trägerspezifische Schlüssel in der Zutrittskontrollvorrichtung unter Anwendung der Schlüsselableitungsfunktion aus dem Systemschlüssel und dem Trägeridentifikator und zusätzlich aus dem Gruppenidentifikator abgeleitet wird.

Die durch den Gruppenidentifikator zum Ausdruck gebrachte Zugehörigkeit zu einer identifizierbaren Gruppe von Zutrittskontrollvorrichtungen fließt somit in die Ableitung des trägerspezifischen Schlüssels mit ein. Dies schafft unter anderem die Möglichkeit, verschiedene Operationen zur Herstellung der Sicherheit im Zutrittskontrollsystem zu beschleunigen, wie z.B. das Sperren von Zutrittskontrollvorrichtungen mit gleichem Gruppenidentifikator.

Gemäß einem zweiten Aspekt der Erfindung ist bei einem Zutrittskontrollsystem der eingangs genannten Art vorgesehen, dass der elektronische Berechtigungsträger und die Zutrittskontrollvorrichtung ausgebildet sind, um zur Einrichtung eines sicheren Übertragungskanals miteinander zusammenzuwirken, wobei die Systemverwaltungseinheit und die Zutrittskontrollvorrichtung, nicht jedoch der elektronische Berechtigungsträger einen gemeinsamen Systemschlüssel gespeichert haben und der elektronische Berechtigungsträger einen Trägeridentifikator und einen trägerspezifischen Schlüssel gespeichert hat und dass der Berechtigungsträger und die Zutrittskontrollvorrichtung für die Überprüfung der Authentizität und Integrität des Übertragungskanals ausgebildet sind, um den trägerspezifischen Schlüssel in der Zutrittskontrollvorrichtung unter Anwendung einer Schlüsselableitungsfunktion aus dem Systemschlüssel und dem Trägeridentifikator abzuleiten und die Übereinstimmung des abgeleiteten trägerspezifischen Schlüssels mit dem im Berechtigungsträger gespeicherten trägerspezifischen Schlüssel zu überprüfen, vorzugsweise unter Verwendung eines Zero-Knowledge-Protokolls.

Das erfindungsgemäße Zutrittskontrollsystem eignet sich insbesondere für die Durchführung des erfindungsgemäßen Verfahrens.

Gemäß einer bevorzugten Ausbildung des Zutrittskontrollsystems sind der elektronische Berechtigungsträger und die Zutrittskontrollvorrichtung ausgebildet, um im elektronischen Berechtigungsträger und in der Zutrittskontrollvorrichtung aus dem trägerspezifischen Schlüssel wenigstens einen geheimen, gemeinsamen Sitzungsschlüssel abzuleiten, worauf der wenigstens eine Sitzungsschlüssel zum Einrichten des sicheren Übertragungskanals zwischen dem elektronischen Berechtigungsträger und der Zutrittskontrollvorrichtung verwendet wird.

Bevorzugt ist weiters vorgesehen, dass die Systemverwaltungseinheit zur Programmierung des elektronischen Berechtigungsträgers ausgebildet ist, um in der Systemverwaltungseinheit den trägerspezifischen Schlüssel unter Anwendung einer Schlüsselableitungsfunktion aus dem in der Systemverwaltungseinheit gespeicherten Systemschlüssel und der Trägeridentifikator abzuleiten und den trägerspezifischen Schlüssel, ggf. gemeinsam mit Zutrittsrechtsdaten, von der Systemverwaltungseinheit über eine drahtlose Kommunikationsverbindung, insbesondere über ein Mobilfunknetz, an den elektronischen Berechtigungsträger zu übermitteln.

In bevorzugter Weise ist der Datenaustausch zwischen dem elektronischen Berechtigungsträger und der Zutrittskontrollvorrichtung mittels eines symmetrischen Verschlüsselungsverfahrens verschlüsselt, vorzugsweise unter Verwendung von Blockchiffren.

Mit Vorteil ist das Verschlüsselungsverfahren mit einem Authentifizierungsverfahren kombiniert, wobei das Authentifizierungsverfahren bevorzugt einen Message Authentication Code (MAC) - Algorithmus umfasst, bei dem aus den zu schützenden Daten und einem geheimen Schlüssel eine Prüfsumme (Message Authentication Code) errechnet wird, wobei die Kombination des Verschlüsselungsverfahrens mit dem Authentifizierungsverfahren vorzugsweise als Authenticated Encryption with Associated Data (AEAD) - Verfahren ausgebildet ist.

Das Zutrittskontrollsystem kann vorzugsweise eine Mehrzahl von Zutrittskontrollvorrichtungen umfassen, die Systemverwaltungseinheit und die Zutrittskontrollvorrichtung, nicht jedoch der elektronische Berechtigungsträger einen gemeinsamen Gruppenidentifikator gespeichert haben, wobei die Zutrittskontrollvorrichtung ausgebildet ist, um den trägerspezifischen Schlüssel in der Zutrittskontrollvorrichtung unter Anwendung der Schlüsselableitungsfunktion aus dem Systemschlüssel und dem Trägeridentifikator und zusätzlich aus dem Gruppenidentifikator abzuleiten.

Insbesondere können die Zutrittsrechtsdaten im Berechtigungsträger mit einem Medienschlüssel verschlüsselt vorliegen, wobei der Medienschlüssel in der Systemverwaltungseinheit und in der Zutrittskontrollvorrichtung, nicht jedoch in dem elektronischen Berechtigungsträger gespeichert ist.

Gemäß einer bevorzugten Ausgestaltung ist der Berechtigungsträger als mobiles Telekommunikationsgerät, wie z.B. als Mobiltelefon oder Smartphone ausgebildet. Die Erfindung ist in diesem Fall bevorzugt dahingehend weitergebildet, dass die Sende-/Empfangseinrichtung für die drahtlose, bevorzugt induktive Datenübertragung insbesondere nach dem NFC- bzw. RFID-Standard (ISO/IEC 14443) oder dem Bluetooth-Standard ausgebildet ist.

Die Erfindung wird nachfolgend anhand von in der Zeichnung schematisch dargestellten Ausführungsbeispielen näher erläutert. In dieser zeigt Fig. 1 den schematischen Aufbau eines Zutrittskontrollsystems, Fig. 2 eine Blockdarstellung des Zutrittskontrollsystems, Fig. 3 ein Diagramm eines Protokollablaufs zur Einrichtung eines sicheren Übertragungskanals, Fig. 4 die Darstellung einer Schlüsselableitungsfunktion und Fig. 5 die Verkettung von Zutrittsrechtsdatenblöcken.

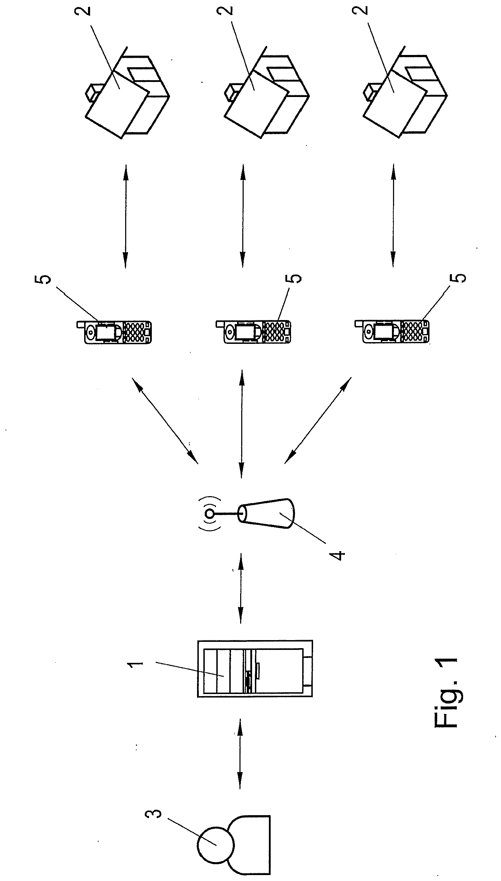

In Fig. 1 ist eine Systemverwaltungseinheit mit 1 bezeichnet. Die Objekte, zu denen der Zutritt mit Hilfe des Zutrittskontrollsystems kontrolliert werden soll, sind mit 2 bezeichnet und im vorliegenden Fall schematisch als Häuser dargestellt. Die Objekte 2 können auch Türen innerhalb einer Schließanlage darstellen und weisen jeweils eine Zutrittskontrollvorrichtung auf. Ein Administrator 3 verwaltet die Systemverwaltungseinheit 1 und kann Zutrittsberechtigungen vergeben. Die Systemverwaltungseinheit 1 ist an ein Telekommunikationsnetz 4 angeschlossen, wie beispielsweise ein LAN, WLAN, GSM-, GPRS- oder UMTS-Netz und kann über das Netz 4 Zutrittsrechtsdaten an Berechtigungsträger, wie z.B. mobile Telekommunikationseinrichtungen 5 senden. Bei den mobilen Telekommunikationseinrichtungen 5 handelt es sich z.B. um SmartPhones, die mit einer Schlüsselfunktion ausgestattet sind. Die SmartPhones weisen beispielsweise ein NFC- oder Bluetooth-Modul sowie einen Speicher auf, in den die von der Systemverwaltungseinheit 1 erhaltenen Zutrittsrechtsdaten geschrieben werden können. Wenn nun das als Schlüssel verwendete Telekommunikationsgerät 5 in die Nähe einer Zutrittskontrollvorrichtung gebracht wird, wird eine bidirektionale Datenübertragung zwischen der entsprechenden NFC- oder Bluetooth-Schnittstelle des Telekommunikationsgerät 5 und einer Sende-/Empfangseinheit der Zutrittskontrollvorrichtung gestartet, in deren Verlauf die Zutrittsrechtsdaten an die Zutrittskontrollvorrichtung übermittelt werden. Wenn die Zutrittskontrollvorrichtung eine Zutrittsberechtigung feststellt, wird ein zugeordnetes Sperrmittel freigegeben.

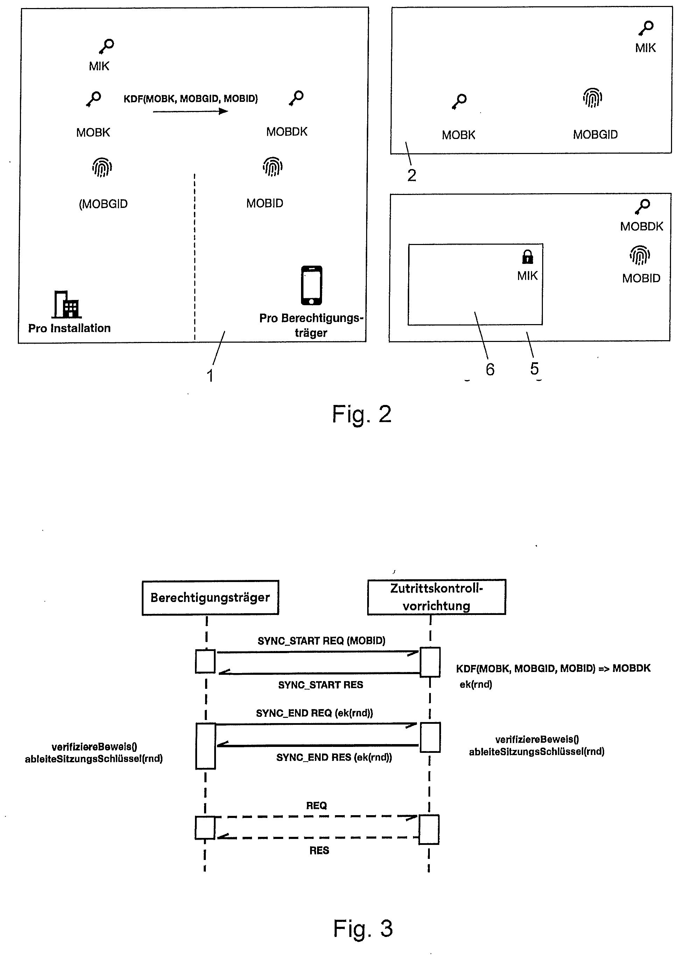

In Fig. 2 ist eine Blockdarstellung des Zutrittskontrollsystems gezeigt, wobei dieses wiederum eine Systemverwaltungseinheit 1, eine (von mehreren) Zutrittskontrollvorrichtung 2 und einen (von mehreren) Berechtigungsträger 5 umfasst, der als mobile Telekommunikationseinrichtung ausgebildet sein kann und Zutrittsrechtsdaten 6 gespeichert hat.

Die Systemverwaltungseinheit 1 umfasst eine Datenbank, in welcher die beteiligten Berechtigungsträger in Form von den diesen jeweils zugeordneten Trägeridentifikatoren (MOBID) gespeichert sind. Weiters ist ein systemweit einheitlicher Systemschlüssel (MOBK) gespeichert. Weiters ist ein Gruppenidentifikator (MOBGID) gespeichert, welcher die Zugehörigkeit von Zutrittskontrollvorrichtungen zu einer jeweiligen Gruppe kennzeichnet. Schließlich ist in der Systemverwaltungseinheit 1 ein Medienschlüssel (MIK) gespeichert.

Weiters ist in Fig. 2 dargestellt, dass in der Systemverwaltungseinheit 3 aus dem Systemschlüssel (MOBK), des Gruppenidentifikators (MOBGID) und des Trägeridentifikators (MOBID) mit Hilfe einer Schlüsselableitungsfunktion (KDF) ein trägerspezifischer Schlüssel (MOBDK) abgeleitet werden kann.

In dem Berechtigungsträger 5 ist der Trägeridentifikator (MOBID) gespeichert, welcher den jeweiligen Berechtigungsträger 5 identifiziert. Weiters ist im Berechtigungsträger 5 der trägerspezifische Schlüssel (MOBDK) gespeichert. Die Zutrittsrechtsdaten 6 sind mit dem Medienschlüssel (MIK) gespeichert.

In der Zutrittskontrollvorrichtung 2 sind der Gruppenidentifikator (MOBGID), der Medienschlüssel (MIK) und der Systemschlüssel (MOBK) gespeichert. Für den Aufbau eines sicheren Übertragungskanals zwischen der Zutrittskontrollvorrichtung 2 und einem Berechtigungsträger 5 kann die Zutrittskontrollvorrichtung 2 aus dem Systemschlüssel (MOBK), dem Gruppenidentifikator (MOBGID) und dem Trägeridentifikator (MOBID) mit Hilfe einer Schlüsselableitungsfunktion (KDF) einen trägerspezifischen Schlüssel (MOBDK) ableiten.

Die Einrichtung eines sicheren Übertragungskanals ist in Fig. 3 gezeigt. Auf der linken Seite ist der Berechtigungsträger 5 und auf der rechten Seite die Zutrittskontrollvorrichtung 2 dargestellt. Zuerst übermittelt der Berechtigungsträger eine Anfrage (SYNC START REQ), mit welcher der Trägeridentifikator (MOBID) gesendet wird. In der Zutrittskontrollvorrichtung wird der erhaltene Trägeridentifikator (MOBID) gemeinsam mit dem dort gespeicherten Gruppenidentifikator (MOBGID) und dem Systemschlüssel (MOBK) verwendet, um mit Hilfe einer Schlüsselableitungsfunktion (KDF) einen trägerspezifischen Schlüssel (MOBDK) abzuleiten und es wird eine Antwortnachricht (SNYC START RES) übermittelt. Danach wird mit Hilfe eines Zero-Knowledge Protokolls überprüft, ob sowohl im Berechtigungsträger als auch in der Zutrittskontrollvorrichtung derselbe trägerspezifische Schlüssel (MOBDK) vorliegt. Zu diesem Zweck wird im Rahmen dieses Protokolls im Berechtigungsträger ein Sitzungsschüssel erstellt und mit der Nachricht (SYNC END REQ) an die Zutrittskontrollvorrichtung übermittelt. Im Rahmen des Zero-Knowledge Protokolls wird auch in der Zutrittskontrollvorrichtung ein Sitzungsschüssel erstellt und in die Antwortnachricht (SYNC END RES)integriert. Danach ist ein sicherer Übertragungskanal eingerichtet und über diesen Kanal erfolgt der weitere Datenaustausch.

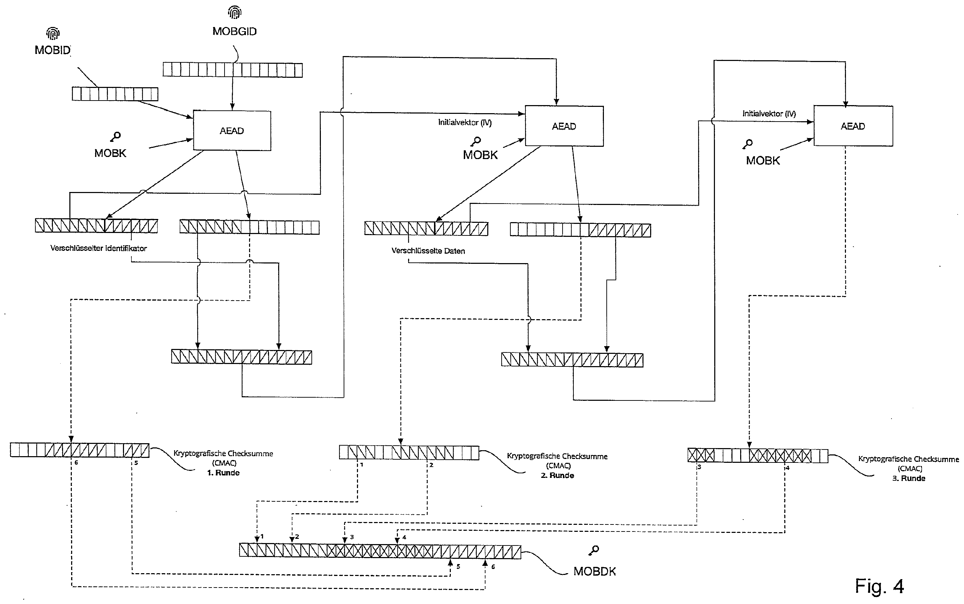

Fig. 4 zeigt beispielhaft eine Schlüsselableitungsfunktion (KDF) zur Ableitung eines trägerspezifischen Schlüssels (MOBDK) aus dem Systemschlüssel (MOBK), dem Gruppenidentifikator (MOBGID) und dem Trägeridentifikator (MOBID).

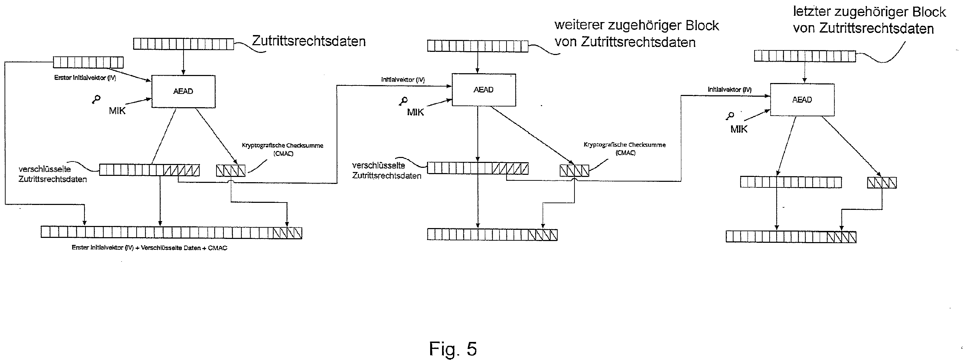

Fig. 5 zeigt die Verkettung von Zutrittsrechtsdatenblöcken.

## Patentansprüche

1. Verfahren zum Betreiben eines Zutrittskontrollsystems zur Zutrittskontrolle insbesondere in Gebäuden, wobei das Zutrittskontrollsystem wenigstens eine elektronische Systemverwaltungseinheit (1), wenigstens einen elektronischen, von der Systemverwaltungseinheit (1) mit Zutrittsrechtsdaten drahtlos beschreibbaren Berechtigungsträger (5) und wenigstens eine Zutrittskontrollvorrichtung (2) umfasst, wobei das Verfahren die Einrichtung eines sicheren Übertragungskanals zwischen dem elektronischen Berechtigungsträger (5) und der Zutrittskontrollvorrichtung (2) und die Übermittlung von Zutrittsrechtsdaten vom elektronischen Berechtigungsträger (5) an die Zutrittskontrollvorrichtung (2) über den sicheren Übertragungskanal umfasst, wobei die Zutrittsrechtsdaten in der Zutrittskontrollvorrichtung (2) zur Feststellung der Zutrittsberechtigung ausgewertet werden und in Abhängigkeit von der festgestellten Zutrittsberechtigung ein Sperrmittel zum wahlweisen Freigeben oder Sperren des Zutritts angesteuert wird, **dadurch gekennzeichnet, dass** die Systemverwaltungseinheit (1) und die Zutrittskontrollvorrichtung (2), nicht jedoch der elektronische Berechtigungsträger (5) einen gemeinsamen Systemschlüssel gespeichert haben und der elektronische Berechtigungsträger (5) einen Trägeridentifikator und einen trägerspezifischen Schlüssel gespeichert hat und dass die Einrichtung des sicheren Übertragungskanals die Überprüfung der Authentizität und Integrität des Übertragungskanals umfasst, indem der trägerspezifische Schlüssel in der Zutrittskontrollvorrichtung (2) unter Anwendung einer Schlüsselableitungsfunktion aus dem Systemschlüssel und dem Trägeridentifikator abgeleitet wird und die Übereinstimmung des abgeleiteten trägerspezifischen Schlüssels mit dem im Berechtigungsträger (5) gespeicherten trägerspezifischen Schlüssel überprüft wird, vorzugsweise unter Verwendung eines Zero-Knowledge-Protokolls.

2. Verfahren nach Anspruch 1, **dadurch gekennzeichnet, dass** im elektronischen Berechtigungsträger (5) und in der Zutrittskontrollvorrichtung (2) aus dem trägerspezifischen Schlüssel wenigstens ein geheimer, gemeinsamer Sitzungsschlüssel abgeleitet wird, worauf der wenigstens eine Sitzungsschlüssel zum Einrichten des sicheren Übertragungskanals zwischen dem elektronischen Berechtigungsträger (5) und der Zutrittskontrollvorrichtung (2) verwendet wird.

3. Verfahren nach Anspruch 1 oder 2, **dadurch gekennzeichnet, dass** der elektronische Berechtigungsträger (5) programmiert wird, indem in der Systemverwaltungseinheit (1) der trägerspezifische Schlüssel unter Anwendung einer Schlüsselableitungsfunktion aus dem in der Systemverwaltungseinheit (1) gespeicherten Systemschlüssel und der Trägeridentifikator abgeleitet wird und der trägerspezifische Schlüssel, ggf. gemeinsam mit Zutrittsrechtsdaten, von der Systemverwaltungseinheit (1) über eine drahtlose Kommunikationsverbindung, insbesondere über ein Mobilfunknetz, an den elektronischen Berechtigungsträger (5) übermittelt wird.

4. Verfahren nach Anspruch 1, 2 oder 3, **dadurch gekennzeichnet, dass** der Datenaustausch zwischen dem elektronischen Berechtigungsträger (5) und der Zutrittskontrollvorrichtung (2) mittels eines symmetrischen Verschlüsselungsverfahrens verschlüsselt ist, vorzugsweise unter Verwendung von Blockchiffren.

5. Verfahren nach Anspruch 4, **dadurch gekennzeichnet, dass** das Verschlüsselungsverfahren mit einem Authentifizierungsverfahren kombiniert ist, wobei das Authentifizierungsverfahren bevorzugt einen Message Authentication Code (MAC) - Algorithmus umfasst, bei dem aus den zu schützenden Daten und einem geheimen Schlüssel eine Prüfsumme (Message Authentication Code) errechnet wird, wobei die Kombination des Verschlüsselungsverfahrens mit dem Authentifizierungsverfahren vorzugsweise als Authenticated Encryption with Associated Data (AEAD) - Verfahren ausgebildet ist.

6. Verfahren nach einem der Ansprüche 1 bis 5, **dadurch gekennzeichnet, dass** das Zutrittskontrollsystem eine Mehrzahl von Zutrittskontrollvorrichtungen (2) umfasst, die Systemverwaltungseinheit (1) und die Zutrittskontrollvorrichtung (2), nicht jedoch der elektronische Berechtigungsträger (5) einen gemeinsamen Gruppenidentifikator gespeichert haben und dass der trägerspezifische Schlüssel in der Zutrittskontrollvorrichtung (2) unter Anwendung der Schlüsselableitungsfunktion aus dem Systemschlüssel und dem Trägeridentifikator und zusätzlich aus dem Gruppenidentifikator abgeleitet wird.

7. Verfahren nach einem der Ansprüche 1 bis 6, **dadurch gekennzeichnet, dass** die Zutrittsrechtsdaten im Berechtigungsträger (5) mit einem Medienschlüssel verschlüsselt vorliegen und dass der Medienschlüssel in der Systemverwaltungseinheit (1) und in der Zutrittskontrollvorrichtung (2), nicht jedoch in dem elektronischen Berechtigungsträger (5) gespeichert ist.

8. Zutrittskontrollsystem zur Zutrittskontrolle insbesondere in Gebäuden, insbesondere zur Durchführung des Verfahrens nach einem der Ansprüche 1 bis 7, umfassend wenigstens eine elektronische Systemverwaltungseinheit (1), wenigstens einen elektronischen, von der Systemverwaltungseinheit (1) mit Zutrittsrechtsdaten drahtlos beschreibbaren Berechtigungsträger (5) und wenigstens eine Zutrittskontrollvorrichtung (2) mit einem Sperrmittel zum wahlweisen Freigeben oder Sperren des Zutritts und einer Sende-/Empfangseinrichtung, um eine bidirektionale Datenübermittlung zwischen dem elektronischen Berechtigungsträger (5) und der Zutrittskontrollvorrichtung zu erlauben, wobei die Zutrittskontrollvorrichtung Datenverarbeitungsmittel zur Feststellung der Zutrittsberechtigung auf Grund von empfangenen Zutrittsrechtsdaten aufweist und die Datenverarbeitungsmittel mit dem Sperrmittel zum wahlweisen Freigeben oder Sperren des Zutritts zusammenwirken, **dadurch gekennzeichnet, dass** der elektronische Berechtigungsträger (5) und die Zutrittskontrollvorrichtung (2) ausgebildet sind, um zur Einrichtung eines sicheren Übertragungskanals miteinander zusammenzuwirken, wobei die Systemverwaltungseinheit und die Zutrittskontrollvorrichtung (2), nicht jedoch der elektronische Berechtigungsträger (5) einen gemeinsamen Systemschlüssel gespeichert haben und der elektronische Berechtigungsträger (5) einen Trägeridentifikator und einen trägerspezifischen Schlüssel gespeichert hat und dass der Berechtigungsträger (5) und die Zutrittskontrollvorrichtung (2) für die Überprüfung der Authentizität und Integrität des Übertragungskanals ausgebildet sind, um den trägerspezifischen Schlüssel in der Zutrittskontrollvorrichtung (2) unter Anwendung einer Schlüsselableitungsfunktion aus dem Systemschlüssel und dem Trägeridentifikator abzuleiten und die Übereinstimmung des abgeleiteten trägerspezifischen Schlüssels mit dem im Berechtigungsträger (5) gespeicherten trägerspezifischen Schlüssel zu überprüfen, vorzugsweise unter Verwendung eines Zero-Knowledge-Protokolls.

9. Zutrittskontrollsystem nach Anspruch 8, **dadurch gekennzeichnet, dass** der elektronische Berechtigungsträger (5) und die Zutrittskontrollvorrichtung (2) ausgebildet sind, um im elektronischen Berechtigungsträger (5) und in der Zutrittskontrollvorrichtung (2) aus dem trägerspezifischen Schlüssel wenigstens einen geheimen, gemeinsamen Sitzungsschlüssel abzuleiten, worauf der wenigstens eine Sitzungsschlüssel zum Einrichten des sicheren Übertragungskanals zwischen dem elektronischen Berechtigungsträger (5) und der Zutrittskontrollvorrichtung (2) verwendet wird.

10. Zutrittskontrollsystem nach Anspruch 8 oder 9, **dadurch gekennzeichnet, dass** die Systemverwaltungseinheit (1) zur Programmierung des elektronischen Berechtigungsträgers (5) ausgebildet ist, um in der Systemverwaltungseinheit den trägerspezifischen Schlüssel unter Anwendung einer Schlüsselableitungsfunktion aus dem in der Systemverwaltungseinheit gespeicherten Systemschlüssel und der Trägeridentifikator abzuleiten und den trägerspezifischen Schlüssel, ggf. gemeinsam mit Zutrittsrechtsdaten, von der Systemverwaltungseinheit (1) über eine drahtlose Kommunikationsverbindung, insbesondere über ein Mobilfunknetz (4), an den elektronischen Berechtigungsträger (5) zu übermitteln.

11. Zutrittskontrollsystem nach einem der Ansprüche 8 bis 10, **dadurch gekennzeichnet, dass** der Datenaustausch zwischen dem elektronischen Berechtigungsträger (5) und der Zutrittskontrollvorrichtung (2) mittels eines symmetrischen Verschlüsselungsverfahrens verschlüsselt ist, vorzugsweise unter Verwendung von Blockchiffren.

12. Zutrittskontrollsystem nach Anspruch 11, **dadurch gekennzeichnet, dass** das Verschlüsselungsverfahren mit einem Authentifizierungsverfahren kombiniert ist, wobei das Authentifizierungsverfahren bevorzugt einen Message Authentication Code (MAC) - Algorithmus umfasst, bei dem aus den zu schützenden Daten und einem geheimen Schlüssel eine Prüfsumme (Message Authentication Code) errechnet wird, wobei die Kombination des Verschlüsselungsverfahrens mit dem Authentifizierungsverfahren vorzugsweise als Authenticated Encryption with Associated Data (AEAD) - Verfahren ausgebildet ist.

13. Zutrittskontrollsystem nach einem der Ansprüche 8 bis 12, **dadurch gekennzeichnet, dass** das Zutrittskontrollsystem eine Mehrzahl von Zutrittskontrollvorrichtungen (2) umfasst, die Systemverwaltungseinheit (1) und die Zutrittskontrollvorrichtung (2), nicht jedoch der elektronische Berechtigungsträger (5) einen gemeinsamen Gruppenidentifikator gespeichert haben und dass die Zutrittskontrollvorrichtung (2) ausgebildet ist, um den trägerspezifischen Schlüssel in der Zutrittskontrollvorrichtung (2) unter Anwendung der Schlüsselableitungsfunktion aus dem Systemschlüssel und dem Trägeridentifikator und zusätzlich aus dem Gruppenidentifikator abzuleiten.

14. Zutrittskontrollsystem nach einem der Ansprüche 8 bis 13, **dadurch gekennzeichnet, dass** die Zutrittsrechtsdaten im Berechtigungsträger mit einem Medienschlüssel verschlüsselt vorliegen und dass der Medienschlüssel in der Systemverwaltungseinheit (1) und in der Zutrittskontrollvorrichtung, nicht jedoch in dem elektronischen Berechtigungsträger (5) gespeichert ist.

15. Zutrittskontrollsystem nach einem der Ansprüche 8 bis 14, **dadurch gekennzeichnet, dass** der Berechtigungsträger (5) als mobiles Telekommunikationsgerät, wie z.B. als Mobiltelefon oder Smartphone ausgebildet ist.

16. Zutrittskontrollsystem nach einem der Ansprüche 8 bis 15, **dadurch gekennzeichnet, dass** die Sende-/Empfangseinrichtung für die drahtlose, bevorzugt induktive Datenübertragung, insbesondere nach dem NFC- bzw. RFID-Standard (ISO/IEC 14443) oder nach dem Bluetooth-Standard, ausgebildet ist.
